# EUROPEAN PATENT APPLICATION

(11) **EP 4 398 391 A1**
(43) Date of publication of application: **10.07.2024**
(21) Application number: 23216346.9
(22) Date of filing: 13.12.2023
(51) Int. Cl.: H01M 50/209, H01M 50/204, H01M 50/507, H01M 50/503, H01M 10/42, H01M 10/48

(54) **RECHARGEABLE BATTERY PACK**

(30) Priority: 02.01.2023 KR 20230000351
(71) Applicant: Samsung SDI Co., Ltd., Yongin-si, Gyeonggi-do 17084 (KR)
(72) Inventor: Lee, Hyeok, 17084 Yongin-si, Gyeonggi-do (KR)
(74) Representative: Gulde & Partner

(57) **Abstract**

A rechargeable battery pack, including a plurality of battery cells, a side frame accommodating the plurality of battery cells, a busbar holder covering an upper portion of the side frame, the busbar holder having an insertion groove in an upper surface thereof, the busbar holder including a fixing portion protruding from a first edge of the insertion groove, the busbar holder electrically connecting the plurality of battery cells to each other, an attachment plate inserted into the insertion groove, the attachment plate having a portion of a second edge fixed to the fixing portion, the attachment plate electrically connected to the busbar holder, and a temperature sensor electrically connected to the attachment plate, the temperature sensor measuring a temperature of the battery cell and transmitting the measured temperature to a protection circuit module.

## Description

### BACKGROUND

### 1. Field

A rechargeable battery pack is disclosed.

### 2. Description of the Related Art

A rechargeable battery is a battery that is charged and discharged repeatedly, unlike a primary battery. Low-capacity rechargeable batteries are used in small, portable electronic devices such as cell phones, laptop computers, and camcorders. High-capacity and high-density rechargeable batteries are power sources to drive motors in hybrid and electric vehicles, or for energy storage.

### SUMMARY

Embodiments are directed to a rechargeable battery pack, including a plurality of battery cells; a side frame accommodating the plurality of battery cells; a busbar holder covering an upper portion of the side frame, the busbar holder having an insertion groove in an upper surface thereof, the busbar holder including a fixing portion protruding from a first edge of the insertion groove, the busbar holder electrically connecting the plurality of battery cells to each other; an attachment plate inserted into the insertion groove, the attachment plate having a portion of a second edge fixed to the fixing portion, the attachment plate electrically connected to the busbar holder; and a temperature sensor electrically connected to the attachment plate, the temperature sensor measuring a temperature of the battery cell and transmitting the measured temperature to a protection circuit module.

The rechargeable battery pack may include an inner wall surface of the insertion groove and a third edge of the attachment plate inserted into the insertion groove being spaced apart from each other.

The rechargeable battery pack may include the attachment plate being moved into a position of the insertion groove of the busbar holder along a first direction and inserted into the position of the insertion groove, and the portion of the third edge of the attachment plate being fixed by the fixing portion in the inserted state.

The rechargeable battery pack may include a first insertion portion being inserted and fixed into the fixing portion and protruding from the third edge of the attachment plate.

The rechargeable battery pack may include the attachment plate including a plate body inside the insertion groove and electrically connected to the busbar holder, an extension portion extending from one side of the plate body, electrically connected to a cable, and coupled to the temperature sensor, and a second insertion portion protruding from a side surface of the extension portion and inserted and fixed into the fixing portion.

The rechargeable battery pack may include the fixing portion protruding from an edge position of the insertion groove in a single piece and the first insertion portion being inserted and fixed inside the fixing portion.

The rechargeable battery pack may include the second insertion portion protruding in a bent state in an upward direction with respect to a surface of the extension portion and being inserted inside the fixing portion.

The rechargeable battery pack may include a cable being fixed at one end thereof to a surface of the extension portion and extending with a long length in a lateral direction opposite to a side surface in which the insertion portion is formed.

The rechargeable battery pack may include a plurality of through-holes being in the plate body.

The rechargeable battery pack may include the attachment plate including a plate body inserted inside the insertion groove and electrically connected to the busbar holder, an extension portion extending from one side of the plate body, electrically connected to a cable, and coupled to the temperature sensor, and first and second insertion portions each protruding from different edges of the plate body and inserted and fixed into the fixing portion.

The rechargeable battery pack may include the first and second insertion portions including a first insertion piece protruding from a first edge of the plate body and inserted and fixed into the fixing portion, and a second insertion piece protruding from a second edge of the plate body and inserted into the fixing portion.

The rechargeable battery pack may include the first insertion piece protruding from the first edge of one portion of the plate body in a first direction, and the second insertion piece protruding from the second edge of the other portion of the plate body in a second direction that is different from the first direction.

The rechargeable battery pack may include the first direction and the second direction being perpendicular to each other.

The rechargeable battery pack may include a second width of the second insertion piece being longer than a first width of the first insertion piece.

The rechargeable battery pack may include the first insertion piece protruding with a third width that is less than a first length of the first edge of the plate body, and the second insertion piece protruding with a fourth width corresponding to a second length of the second edge.

The rechargeable battery pack may include a plurality of through-holes being in the plate body.

The rechargeable battery pack may include the fixing portion including a first protrusion protruding from an edge position of one side of the insertion groove in a bent state so that the first insertion piece is inserted and fixed therein, and a second protrusion protruding from an edge position of the other side of the insertion groove in a bent state so that the second insertion piece is inserted and fixed therein.

The rechargeable battery pack may include a protrusion size of the second protrusion being larger than a protrusion size of the first protrusion.

Embodiments are directed to a rechargeable battery pack, including a plurality of battery cells, a side frame accommodating the plurality of battery cells, a busbar holder covering an upper portion of the side frame, the busbar holder having an insertion groove in an upper surface thereof, the busbar holder including a fixing portion protruding from an edge of the insertion groove, the busbar holder electrically connecting the plurality of battery cells to each other, and a temperature sensor measuring a temperature of the battery cell and transmitting the measured temperature to a protection circuit module.

Embodiments are directed to a rechargeable battery pack, including a plurality of battery cells; a busbar holder having an insertion groove in an upper surface thereof; the busbar holder including a fixing portion protruding from an edge of the insertion groove, the busbar holder electrically connecting the plurality of battery cells to each other; an attachment plate inserted into the insertion groove, the attachment plate having a portion of an edge fixed to the fixing portion, the attachment plate electrically connected to the busbar holder, and a temperature sensor electrically connected to the attachment plate, the temperature sensor measuring a temperature of the battery cell and transmitting the measured temperature to a protection circuit module.

### BRIEF DESCRIPTION OF THE DRAWINGS

Features will become apparent to those of skill in the art by describing in detail exemplary embodiments with reference to the attached drawings in which:
FIG. 1 is a perspective view showing a rechargeable battery pack.
FIG. 2 is an exploded perspective view showing the rechargeable battery pack of FIG. 1.
FIG. 3 is a perspective view showing an attachment plate coupled with a temperature sensor being inserted and fixed inside an insertion groove in a busbar holder.
FIG. 4 is an exploded perspective view showing an insertion groove without an attachment plate.
FIG. 5 is a perspective view showing an attachment plate.
FIG. 6 is a perspective view showing a rechargeable battery pack.
FIG. 7 is a perspective view showing an attachment plate coupled with a temperature sensor inserted and fixed inside an insertion groove in a busbar holder.
FIG. 8 is an exploded perspective view showing an attachment plate removed from the insertion groove in FIG. 7.
FIG. 9 is a perspective view showing an insertion groove into which the attachment plate in FIG. 8 is inserted and fixed.
FIG. 10 is a perspective view showing an attachment plate.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

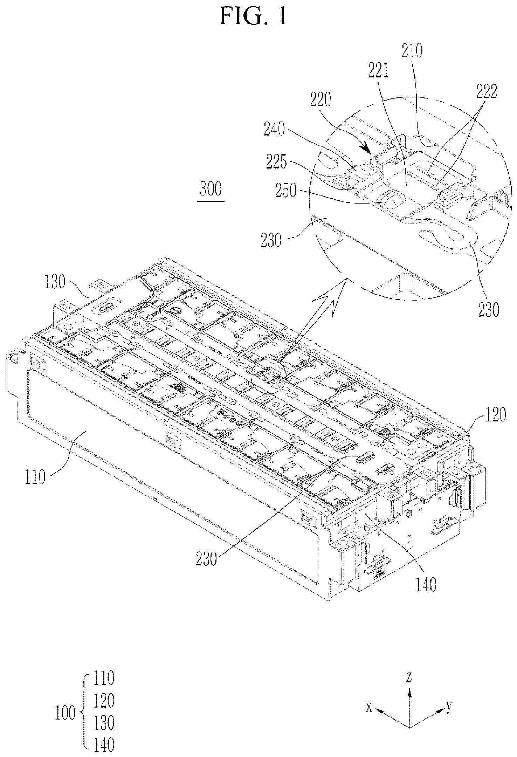

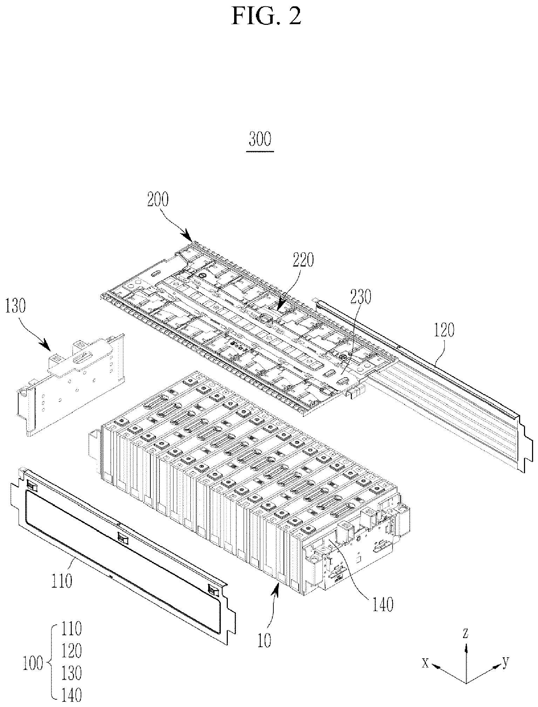

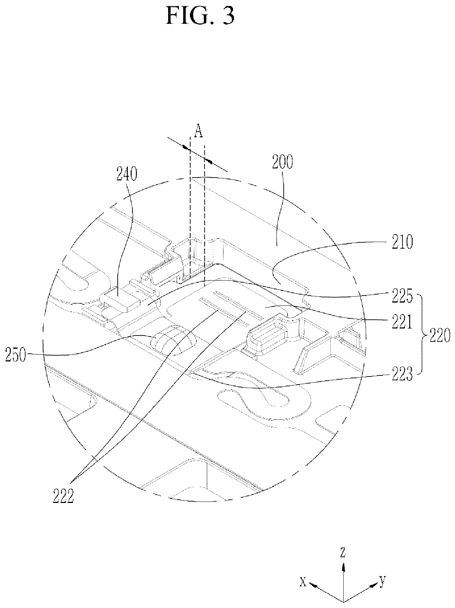

FIG. 1 is a perspective view showing a rechargeable battery pack. FIG. 2 is an exploded perspective view showing the rechargeable battery pack of FIG. 1. FIG. 3 is a perspective view showing an attachment plate coupled with a temperature sensor being inserted and fixed inside an insertion groove in a busbar holder.

As illustrated in FIGS. 1 to 3, a rechargeable battery pack 300 may include a plurality of battery cells 10, a side frame 100 configured to accommodate the plurality of battery cells 10, a busbar holder 200 configured to cover an upper portion of the side frame 100 and electrically connect the plurality of battery cells 10 to each other and having an insertion groove 210 on an upper surface thereof and a fixing portion 240 on an edge of the insertion groove 210, an attachment plate 220 inserted into the insertion groove 210 and having a portion of an edge thereof fixed to the fixing portion 240 and electrically connected to the busbar holder 200, and a temperature sensor 250 electrically connected to the attachment plate 220 and configured to measure temperature of the battery cell 10 and transmit the measured temperature to a protection circuit module. A plurality of battery cells 10 may be configured as a conventional rechargeable battery that is repeatedly charged and discharged. The insertion groove 210 may be a generally square or rectangular recess in an upper surface of the busbar holder 200.

The side frame 100 may include a first side frame 110 configured to support one side surface of the plurality of battery cells 10, a second side frame 120 configured to support the other side surface of the plurality of battery cells 10, a first end frame 130 connected at both ends thereof to respective one ends of the first side frame 110 and the second side frame 120, and a second end frame 140 connected at both ends thereof to respective the other ends of the first side frame 110 and the second side frame 120.

The first side frame 110 may support one side of the plurality of battery cells 10. The second side frame 120 may support the other side of the plurality of battery cells 10.

The first end frame 130 may connect respective one ends of the first side frame 110 and the second side frame 120. That is, one end of the first end frame 130 may be connected to one end of the first side frame 110 by a fastening member, and the other end of the first end frame 130 may be connected to one end of the second side frame 120 by another or by the same fastening member.

The second end frame 140 may connect the other ends of the first side frame 110 and the second side frame 120. That is, one end of the second end frame 140 may be connected to the other end of the first side frame 110 by a fastening member, and the other end of the second end frame 140 may be connected to the other end of the second side frame 120 by another or the same fastening member. The first side frame 110, the second side frame 120, the first end frame 130 and the second end frame 140 may be connected by a single fastening member.

The busbar holder 200, which may electrically connect the plurality of battery cells 10 to each other and have the insertion groove 210 in the upper surface thereof, may be coupled to the upper portion of the side frame 100.

The busbar holder 200 may be at an upper side of the plurality of battery cells 10 to electrically connect the battery cells 10 to each other. The insertion groove 210 may be in the busbar holder 200 for a connection of the temperature sensor 250 that measures temperature of the battery cell 10 with the busbar holder 200.

The insertion groove 210 may be in a surface of one side edge portion of the busbar holder 200, into which the attachment plate 220 may be inserted and fixed such that the attachment plate 220 is electrically connected to the temperature sensor 250. Due to the attachment plate 220 being arranged in the insertion groove 210, the temperature sensor 250 may not protrude from a surface of the busbar holder 200 in which the insertion groove 210 is.

The insertion groove 210 may be inside a surface of the busbar holder 200 corresponding to a shape of the attachment plate 220 and may be in a square planar shape on the surface of the busbar holder 200 corresponding to the shape of the attachment plate 220 that has a square planar shape in this embodiment. The attachment plate 220 may be inserted into the insertion groove 210 and electrically connected to the busbar holder 200.

Meanwhile, the attachment plate 220 may be inserted into the insertion groove 210 and electrically connected to the busbar holder 200. One side of the attachment plate 220 may be electrically connected to a cable 230 in which the temperature sensor 250 is installed. The temperature sensor 250 may be attached to the cable 230.

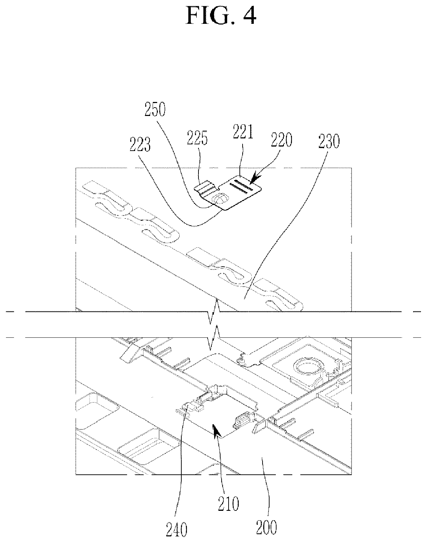

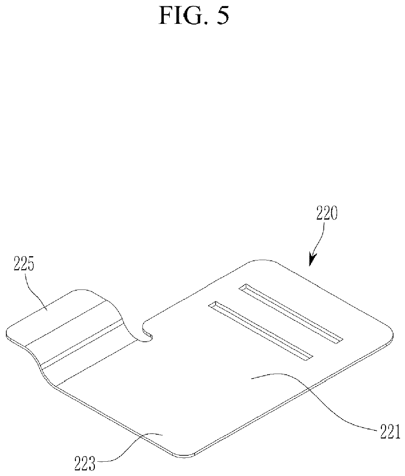

FIG. 4 is an exploded perspective view showing an insertion groove without an attachment plate. FIG. 5 is a perspective view showing an attachment plate.

More specifically described with reference to FIGS. 4 and 5, the attachment plate 220 may include a plate body 221 that is inserted inside the insertion groove 210 and electrically connected to the busbar holder 200, an extension portion 223 that may extend from one side of the plate body 221 and may be electrically connected to a cable 230 to which the temperature sensor 250 is fixed, and an insertion portion 225 that may protrude from a side surface of the extension portion 223 and may be inserted into and fixed in the fixing portion 240. The insertion portion 225 may be bent upwards from an edge of the extension portion 223 of the attachment plate. The insertion portion 225 may have two, three or four portions bent or inclined with respect to the neighboring portion. The insertion portion may form a Z-shape or an S-shape together with the extension portion 223.

The plate body 221 may be inserted inside the insertion groove 210 and electrically connected to the busbar holder 200. To this end, the plate body 221 may be made from a metallic material such as nickel (Ni). The electrical connection of the attachment plate 220 and the busbar holder 200 may be accomplished by filling a thermally conductive filling material inside the insertion groove 210. The thermally conductive filling material may be, e.g., a thermally conductive adhesive. The thermally conductive filling material may allow thermal energy from the busbar of the busbar holder 200 to be transferred to the temperature sensor 250.

The plate body 221 may for example be in a square or rectangular planar shape corresponding to the shape of the square or rectangular insertion groove 210 and may be inserted inside the insertion groove 210 and coupled to the busbar holder 200 by welding. The plate body 221 may be spaced apart from an inner wall surface of the insertion groove 210 by a predetermined distance A (see FIG. 3) and may be inserted inside the insertion groove 210 so that the plate body 221 may be stably coupled to the inside of the insertion groove 210 by sufficiently inserting the specified thermally conductive filling material.

A plurality of through-holes 222 may be in a surface of the plate body 221. As described above, the through-hole 222 or the through-holes 222 may be on the surface of the plate body 221 to compensate for thermal deformation during the process that the temperature sensor 250 is coupled, e.g. to the extension portion 223, by welding, and to allow for the stable coupling by introducing the specified thermally conductive filling material. The through-holes 222 may have an elongated shape or the shape of a slit. The through-holes 222 may be arranged in parallel to an edge of the plate body 221. The through-holes 222 may extend in the same direction as the direction spanned by the predetermined distance A. There may be a single through-hole 222 or two, three, four or more through-holes 222 arranged in the plate body 221.

The extension portion 223 may protrude from a side surface of the plate body 221, which may be electrically connected to the cable 230 and to which the temperature sensor 250 may be fixed. The extension portion 223 may be made of the same material as the plate body 221 and may extend from the side surface of the plate body 221, and the cable 230 with the temperature sensor 250 installed may be connected to a surface of the extension portion 223. The extension portion 223 portion may be arranged in a plane parallel to the plate body 221. In other words, the plate body 221 and the extension portion 223 may be arranged in a single plane. The plate body 221 and the extension portion 223 may be portions of the same structure or element.

The cable 230 may extend with a long length in a direction of one side of the extension portion 223 when one end of the cable 230 is fixed to the surface of the extension portion 223 and may be electrically connected to the extension portion 223 to transmit a measurement signal of the temperature sensor 250 to the protection circuit module. The insertion portion 225 may protrude from the side surface of the extension portion 223 in a direction (e.g., the x-axis) in which the cable 230 extends.

The insertion portion 225 may protrude from the side surface of the extension portion 223 and may be inserted into and fixed to the fixing portion 240, and the insertion portion 225 may allow the attachment plate 220 to be fixed in an initial inserted position in the process that the attachment plate 220 is inserted into a position of the insertion groove 210.

That is, the attachment plate 220 may be slidably inserted from a position on one side of the insertion groove 210 into the position of the insertion groove 210 in which the insertion portion 225 may be inserted inside the fixing portion 240 so that a first fixation of the insertion portion 225 may be accomplished.

As described above, the attachment plate 220 may be fixed in the insertion groove 210 in a state in which the insertion portion 225 is inserted and first fixed into the fixing portion 240, and it is possible to improve the welding quality by preventing welding defects during the welding fixation process of the temperature sensor 250.

Meanwhile, the fixing portion 240 may protrude in a bent state from an edge position of the insertion groove 210, such that the insertion portion 225 may be inserted and fixed into a bent interior of the fixing portion 240. The fixing portion 240 may define a cavity into which the insertion portion 225 can engage. A lower surface of the fixing portion 240 may be arranged at a small distance from a bottom of the insertion groove 210.

The fixing portion 240 may protrude from the edge of the insertion groove 210 as a single piece, such that the insertion portion 225 protruding from the side surface of the extension portion 223 may be inserted and fixed into the fixing portion 240.

That is, the fixing portion 240 may fix the insertion portion 225 in the process in which the attachment plate 220 is moved into the position of the insertion groove 210, thereby providing a stopper function that ensures positioning in a predetermined position of the attachment plate 220 in the insertion groove 210. The fixing portion 240 may provide a stopper function for the attachment plate 220 in a horizontal and/or in a vertical direction. Further, the fixing portion 240 assures that there is no unwanted movement of the attachment plate 220, e.g. during a welding process.

Accordingly, as the attachment plate 220 is moved from the side surface of the busbar holder 200 to the position of the insertion groove 210, the attachment plate 220 may be positioned in a predetermined position inside the insertion groove 210 by the function of the fixing portion 240 fixing the insertion portion 225. Therefore, during the process of welding and fixing the temperature sensor 250 to the extension portion 223 of the attachment plate 220, the improved welding quality may allow for stable fixation.

Meanwhile, the temperature sensor 250 may be electrically connected to the attachment plate 220 that is inserted into the insertion groove 210 and may be installed to measure and transmit the temperature of the battery cell 10 to the protection circuit module. That is, the temperature sensor 250 may be welded to and electrically connected to the attachment plate 220 when the attachment plate 220 is inserted into the insertion groove 210 and first fixed to the fixing portion 240 in the predetermined position.

As described above, according to this embodiment of the rechargeable battery pack 300, the temperature sensor 250 may be welded to the busbar holder 200 when the attachment plate 220 is first fixed in the predetermined position into the fixing portion 240 in the process of electrically connecting the temperature sensor 250 to the busbar holder 200. Therefore, it is possible to prevent the temperature sensor 250 from experiencing an error in welded coupling, thereby improving durability.

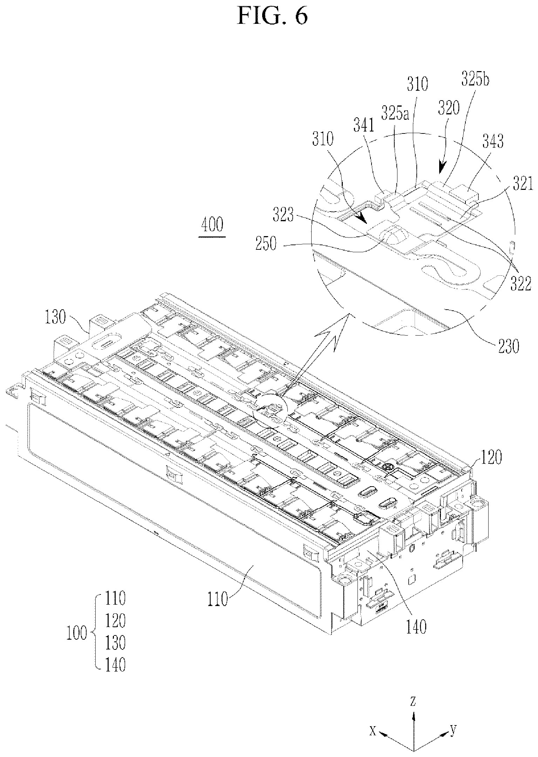

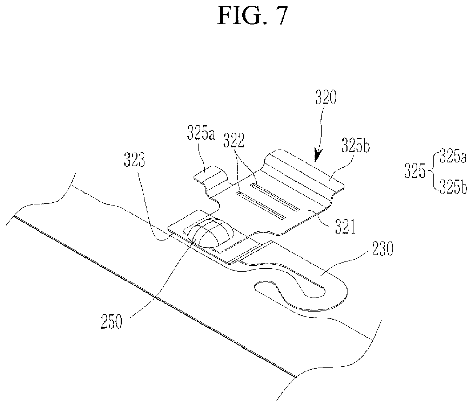

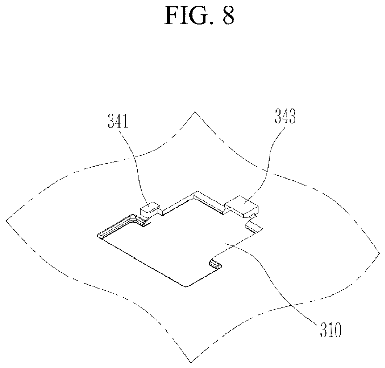

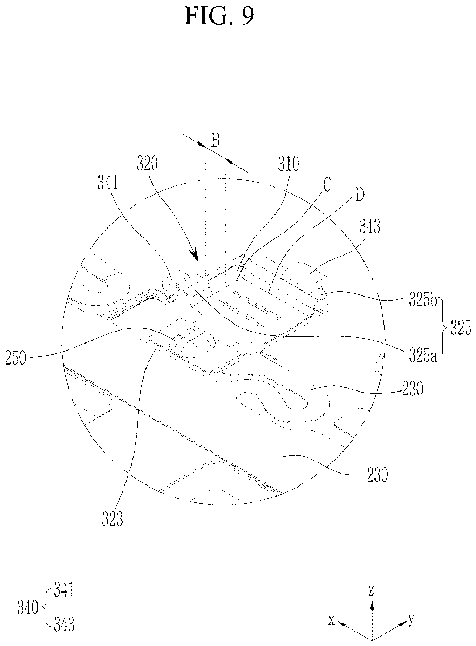

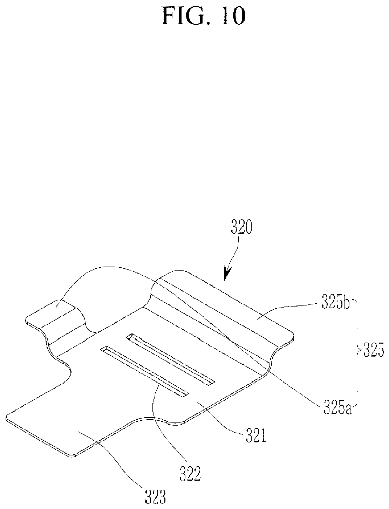

FIG. 6 is a perspective view showing a rechargeable battery pack. FIG. 7 is a perspective view showing an attachment plate coupled with a temperature sensor inserted and fixed inside an insertion groove in a busbar holder. FIG. 8 is an exploded perspective view showing an attachment plate removed from the insertion groove in FIG. 7. FIG. 9 is a perspective view showing an insertion groove into which the attachment plate in FIG. 8 is inserted and fixed. FIG. 10 is a perspective view showing an attachment plate.

The same reference numerals as in FIGS. 1 to 5 refer to the same or similar members of the same or similar features. Hereafter, the same reference numerals will not be described in detail.

As illustrated in FIGS. 6 to 10, an attachment plate 320 of a rechargeable battery pack 400 may include a plate body 321 inserted into the insertion groove 310 and electrically connected to the busbar holder 200, an extension portion 323 extending from one side of the plate body 321 and electrically connected to the cable 230 to which the temperature sensor 250 is fixed, and insertion portions 325 each protruding from different edges of the plate body 321 and inserted and fixed into a fixing portion 340.

The plate body 321 may be inserted inside the insertion groove 310 such that an edge portion of the plate body 321 is electrically connected to the busbar holder 200 inside the insertion groove 310. To this end, the plate body 321 may be made from a metallic material such as nickel (Ni).

The plate body 321 may be in a square planar shape corresponding to the shape of the square insertion groove 310 and may be inserted inside the insertion groove 310 and electrically connected to the insertion groove 310. The electrical connection of the plate body 321 and the busbar holder 200 may be accomplished by filling a thermally conductive filling material inside the insertion groove 310. The thermally conductive filling material may be, e.g., a thermally conductive adhesive. The thermally conductive filling material may allow thermal energy from the busbar of the busbar holder 200 to be transferred to the temperature sensor 250.

The plate body 321 may be spaced apart from an inner wall surface of the insertion groove 310 by a predetermined distance B and may be inserted inside the insertion groove 310 so that the plate body 221 may be stably coupled to the inside of the insertion groove 310 by sufficiently inserting the specified thermally conductive filling material.

A plurality of through-holes 322 may be in a surface of the plate body 321. As described above, the through-holes 322 may be on the surface of the plate body 321 to compensate for thermal deformation during the process that the temperature sensor 250 is coupled by welding, and to allow for the stable coupling by introducing the specified thermally conductive filling material.. The through-holes 322 may have an elongated shape or the shape of a slit. The through-holes 322 may be arranged in parallel to an edge of the plate body 321. The through-holes 322 may extend in the same direction as the direction spanned by the predetermined distance B. There may be a single through-hole 322 or two, three, four or more through-holes 322 arranged in the plate body 321.

The extension portion 323 may protrude from a side surface of the plate body 321, which may be electrically connected to the cable 230 to which the temperature sensor 250 may be fixed. The extension portion 323 may be made of the same material as the plate body 321 and may extend from a side surface of the plate body 321, and the cable 230 with the temperature sensor 250 installed may be connected to a surface of the extension portion 223.

The cable 230 may extend with a long length in a direction of one side of the extension portion 323 if one end of the cable 230 is fixed to the surface of the extension portion 323 and may be electrically connected to a protection circuit module. Meanwhile, the insertion portions 325 may protrude from side surfaces of the plate body 321 and may be inserted and fixed into the fixing portion 340.

The insertion portions 325, which may protrude from the side surfaces of the plate body 321 and may be inserted into and fixed in the fixing portion 340, may protrude from the side surfaces of the plate body 321 to allow the attachment plate 320 to be fixed in a position in which the attachment plate is inserted into the insertion groove 310.

More specifically, the insertion portions 325 may include a first insertion piece 325a protruding from one side of the plate body 321 and inserted into the fixing portion 340, and a second insertion piece 325b protruding from an other side of the plate body 321 and inserted into the fixing portion 340.

The first insertion piece 325a may protrude from a first edge C (see FIG. 9) of the rectangular plate body 321 in a first direction (e.g., an x-axis direction) and may be inserted into and fixed inside the fixing portion 340. The first insertion piece 325a may be bent in an upward direction from the first edge C of the plate body 321 toward the fixing portion 340 and may be inserted into and fixed inside the fixing portion 340. The first insertion piece 325a may protrude from the first edge C and be fixed to the fixing portion 340 by a width having a length less than a length of the first edge C of the plate body 321. The first insertion piece 325a may have a length in a direction along the first edge C shorter than a length of the first edge C.

The second insertion piece 325b may protrude from a second edge D (see FIG. 7) of the rectangular plate body 321 in a second direction (e.g., an y-axis direction) that is perpendicular to the first direction and may be inserted and fixed inside the fixing portion 340. The second insertion piece 325b may be bent in an upward direction from a second edge D of the plate body 321 toward the fixing portion 340 and may be inserted and fixed inside the fixing portion 340.

The second insertion piece 325b may protrude from the second edge D by a width of a length corresponding to a length of the second edge D and may be fixed to the fixing portion 340. The second insertion piece 325b may have a length in a direction along the second edge D that is basically the same as a length of the second edge D. That is, a length of the second insertion piece 325b in a width direction may be greater than a length of the first insertion piece 325a in a width direction. In other words, the width of the second insertion piece 325b may be greater than the width of the first insertion piece. This allows the plate body 321 to be stably fixed to the fixing portion 340 even if the position of the plate body 321 inserted inside the insertion groove 310 is partially changed.

The fixing portion 340 may include a first protrusion 341 protruding from one edge position of the insertion groove 310 in the busbar holder 200 to fix the first insertion piece 325a, and a second protrusion 343 protruding from an other edge position of the insertion groove 310 to fix the second insertion piece 325b. The first edge and the other edge may form an angle of approximately 90°.

The first protrusion 341 may protrude from an edge of one side of the insertion groove 310 in a bent state, and the first insertion piece 325a may be inserted and fixed within the bent interior. Therefore, the first protrusion 341 may fix the plate body 321 in the first direction (e.g., the x-direction) with the plate body 321 inserted inside the insertion groove 310.

The second protrusion 343 may protrude from an edge of the other side of the insertion groove 310 in a bent state, and the second insertion piece 325b may be inserted and fixed within the bent interior. Therefore, the second protrusion 343 may fix the plate body 321 in the second direction (e.g., the y-direction) with the plate body 321 inserted inside the insertion groove 310.

Here, the second protrusion 343 may protrude with a size greater than a protrusion size of the first protrusion 341. This allows the second insertion piece 325b, which is larger than the first insertion piece 325a, to be more stably fixed using the second protrusion 343.

As described above, the first protrusion 341 may fix a position in the first direction (x-axis) of the attachment plate 320, the second protrusion 343 may fix a position in the second direction (y-axis) of the attachment plate 320, and a position in a third direction (z-axis) of the attachment plate 320 may be supported by the first insertion piece 325a and the second insertion piece 325b being engaged and supported within the bent interior of the first protrusion 341 and the second protrusion 343.

Therefore, the attachment plate 320 of this embodiment may be stably fixed and positioned inside the insertion groove 310. Thereby, during the process of welding and coupling the temperature sensor 250 to the extension portion 323 of the attachment plate 320, it is possible to achieve a stable welded coupling without degrading the welding quality.

By way of summation and review, the rechargeable battery may include an electrode assembly that charges and discharges current, a case that accommodates the electrode assembly and an electrolyte, and electrode terminals that are connected to the electrode assembly and extend to the outside of the case. The electrode assembly may be the jellyroll type, which may be formed by winding the electrodes and separator.

Meanwhile, a temperature sensor may be electrically connected to a busbar connected to the battery cell to measure and transmit the temperature of the battery cell to a protection circuit module to detect an abnormal state of the battery cell. The temperature sensor may be electrically connected to the busbar by a plate made of metal through welding.

However, there is a problem in that ensuring welding quality is not easy when it comes to the coupling of the metal plate by welding for installing the temperature sensor. This results in the occurrence of welding defects, impeding the smooth functioning of the temperature sensing operation of the temperature sensor. An embodiment of the present disclosure attempts to provide a rechargeable battery pack capable of stably connecting a temperature sensor without causing welding failure of the temperature sensor.

In the process of electrically connecting the temperature sensor to the busbar holder through welding, the temperature sensor may be coupled by welding in a state where the attachment plate for the connection of the temperature sensor has been first fixed to the busbar holder in a predetermined position. Accordingly, it is possible to improve the welded coupling quality of the temperature sensor

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A rechargeable battery pack (300, 400), comprising:
a plurality of battery cells (10);
a side frame (100) accommodating the plurality of battery cells (10);
a busbar holder (200) covering an upper portion of the side frame (100), the busbar holder (200) having an insertion groove (210) in an upper surface thereof, the busbar holder (200) including a fixing portion (240, 340) protruding from an edge of the insertion groove (210), the busbar holder (200) electrically connecting the plurality of battery cells (10) to each other; and
a temperature sensor (250) measuring a temperature of the battery cell (10) and transmitting the measured temperature to a protection circuit module.

2. The rechargeable battery pack (300, 400) as claimed in claim 1, further comprising:
an attachment plate (220, 320) inserted into the insertion groove (210), the attachment plate (220, 320) having a portion of a second edge fixed to the fixing portion (240, 340), the attachment plate (220, 320) electrically connected to the busbar holder (200) and to the temperature sensor (250).

3. The rechargeable battery pack (300, 400) as claimed in claim 1 or 2, wherein an inner wall surface of the insertion groove (210) and a third edge of the attachment plate (220, 320) inserted into the insertion groove (210) are spaced apart from each other.

4. The rechargeable battery pack (300, 400) as claimed in claim 2 or 3, wherein the attachment plate (220, 320) is moved into a position of the insertion groove (210) of the busbar holder (200) along a first direction and inserted into the position of the insertion groove (210), and the portion of a third edge of the attachment plate (220, 320) is fixed by the fixing portion (240, 340) in the inserted state.

5. The rechargeable battery pack (300, 400) as claimed in one of claims 2 to 4, wherein a first insertion portion (225, 325) is inserted and fixed into the fixing portion (240, 340) and protrudes from a third edge of the attachment plate (220, 320).

6. The rechargeable battery pack (300, 400) as claimed in claim 5, wherein the attachment plate (220, 320) includes:
a plate body (221, 321) inside the insertion groove (210) and electrically connected to the busbar holder (200);
an extension portion (223, 323) extending from one side of the plate body (221, 321), electrically connected to a cable (230), and coupled to the temperature sensor (250); and
a second insertion portion (225, 325) protruding from a side surface of the extension portion (223, 323) and inserted and fixed into the fixing portion (240, 340).

7. The rechargeable battery pack (300, 400) as claimed in claim 5 or 6, wherein the fixing portion (240, 340) protrudes from an edge position of the insertion groove (210) in a single piece and the first insertion portion (225, 325) is inserted and fixed inside the fixing portion (240, 340) and/or the second insertion portion (225, 325) protrudes in a bent state in an upward direction with respect to a surface of the extension portion (223, 323) and is inserted inside the fixing portion (240, 340).

8. The rechargeable battery pack (300, 400) as claimed in one of claims 5 to 7, wherein a cable (230) is fixed at one end thereof to a surface of the extension portion (223, 323) and extends with a long length in a lateral direction opposite to a side surface in which the first insertion portion (225, 325) is formed.

9. The rechargeable battery pack (300, 400) as claimed in one of claims 2 to 8, wherein the attachment plate (220, 320) includes:
a plate body (221, 321) inserted inside the insertion groove (210) and electrically connected to the busbar holder (200);
an extension portion (223, 323) extending from one side of the plate body (221, 321), electrically connected to a cable (230), and coupled to the temperature sensor (250); and
first and second insertion portions (225, 325) each protruding from different edges of the plate body (221, 321) and inserted and fixed into the fixing portion (240, 340).

10. The rechargeable battery pack (300, 400) as claimed in one of claims 6 to 9, wherein the first and second insertion portions (225, 325) include:
a first insertion piece (325a) protruding from a first edge of the plate body (221, 321) and inserted and fixed into the fixing portion (240, 340); and
a second insertion piece (325b) protruding from a second edge of the plate body (221, 321) and inserted into the fixing portion (240, 340), wherein the first insertion piece (325a) protrudes from the first edge of one portion of the plate body (221, 321) in a first direction, and the second insertion piece (325b) protrudes from the second edge of the other portion of the plate body (221, 321) in a second direction that is different from the first direction.

11. The rechargeable battery pack (300, 400) as claimed in claim 10, wherein the first direction and the second direction are perpendicular to each other and/or wherein a second width of the second insertion piece (325b) is longer than a first width of the first insertion piece (325a).

12. The rechargeable battery pack (300, 400) as claimed in one of claims 10 or 11, wherein the first insertion piece (325a) protrudes with a third width that is less than a first length of the first edge of the plate body (221, 321), and the second insertion piece (325b) protrudes with a fourth width corresponding to a second length of the second edge.

13. The rechargeable battery pack (300, 400) as claimed in one of claims 10 to 12, wherein the fixing portion (240, 340) includes:
a first protrusion (341) protruding from an edge position of one side of the insertion groove (210) in a bent state so that the first insertion piece (325a) is inserted and fixed therein; and
a second protrusion (343) protruding from an edge position of the other side of the insertion groove (210) in a bent state so that the second insertion piece (325b) is inserted and fixed therein, wherein a protrusion size of the second protrusion (343) is larger than a protrusion size of the first protrusion (341).

14. The rechargeable battery pack (300, 400) as claimed in one of claims 1 to 13, wherein a plurality of through-holes (222, 322) are in the plate body (221, 321).

15. A rechargeable battery pack (300, 400), comprising:
a plurality of battery cells (10);
a busbar holder (200) having an insertion groove (210) in an upper surface thereof, the busbar holder (200) including a fixing portion (240, 340) protruding from an edge of the insertion groove (210), the busbar holder (200) electrically connecting the plurality of battery cells (10) to each other;
an attachment plate (220, 320) inserted into the insertion groove (210), the attachment plate (220, 320) having a portion of an edge fixed to the fixing portion (240, 340), the attachment plate (220, 320) electrically connected to the busbar holder (200); and
a temperature sensor (250) electrically connected to the attachment plate (220, 320), the temperature sensor (250) measuring a temperature of the battery cell (10) and transmitting the measured temperature to a protection circuit module.
